# EUROPÄISCHE PATENTSCHRIFT

(11) **EP 1 984 745 B1**
(45) Veröffentlichungstag und Bekanntmachung des Hinweises auf die Patenterteilung: **06.08.2014**
(21) Anmeldenummer: 06761700.1
(22) Anmeldetag: 23.06.2006
(51) Int. Cl.: G01P 1/02, F16F 15/02

(54) **SCHOCKISOLATIONSSYSTEM FÜR EINE INERTIALSENSORANORDNUNG**
SHOCK ISOLATION SYSTEM FOR AN INERTIAL SENSOR ARRAY
SYSTEME D'ISOLATION VIS-A-VIS DES CHOCS POUR UN ENSEMBLE DE CAPTEURS INERTIELS

(30) Priorität: 06.07.2005 DE 202005010713 U
(43) Veröffentlichungstag der Anmeldung: 29.10.2008
(73) Patentinhaber: Prüftechnik Dieter Busch AG, 85737 Ismaning (DE)
(72) Erfinder: LYSEN, Heinrich, 85748 Garching (DE)
(86) Internationale Anmeldenummer: PCT/DE2006/001083
(87) Internationale Veröffentlichungsnummer: WO 2007/003161

(56) Entgegenhaltungen:
- WO-A-98/55832
- WO-A1-2004/042425
- GB-A- 802 579
- GB-A- 2 084 330
- GB-A- 2 271 422
- US-A- 4 433 491
- US-A- 5 237 871
- US-A1- 2002 158 390
- US-A1- 2004 150 144

## Beschreibung

Die vorliegende Erfindung betrifft ein Schockisolationssystem für eine Inertialsensoranordnung. Ein ähnlich wirkendes System zur Isolation oder Dämpfung von Vibrationen, die auf eine Inertialsensoranordnung einwirken, ist bekannt aus der DE 698 23 499 T2 bzw. der zugehörigen US 5890569 (Erfinder Goepfert).

Die Bereitstellung eines Schockisolationssystems für Inertialsensoranordnungen, insbesondere solchen mit optisch funktionierenden Kreiselsystemen, oder hochempfindlichen Accelerometern, stellt den Konstrukteur immer vor eine besonders schwierige Aufgabe. Einerseits sind genügend lange Federwege bereitzustellen, um Stöße bzw. mechanische Schockeinwirkungen sicher abzufangen, andererseits darf sich die Relativlage der zu schützenden bzw. zu isolierenden Inertialsensoranordnung in Relation zu definierenden Meßflächen oder -kanten weder durch Temperatureinfluß, noch durch desen Lageänderungen im Rahmen der Meßgenauigkeit signifikant ändern. In diesem Zusammenhang ist vorgeschlagen worden, solche Geräte mit sehr nachgiebigen Stoßschutzvorrichtungen auszustatten, welche zum Zeitpunkt von Messungen für eine kurze Zeit deaktiviert werden, und während der restlichen Zeit Schock- und Stoßschutz gewähren (DE 198 26 615). Es ist Aufgabe der Erfindung, eine verbesserte Schock-, Stoß- und Vibrationsisolation für eine Inertialsensoranordnung zu schaffen, die dauernd wirksam ist, die Meßgenauigkeit der Inertialsensoranordnung deutlich verbessert, lageunempfindlich und temperaturunemfindlich ist und sich insbesondere bei möglichst geringem Bauvolumen auch noch durch besonders niedriges Gewicht auszeichnet.

Aus dem Dokument US 2004/150144 A1 ist bereits eine schockisolierende Aufnahmevorrichtung für eine Inertialsensoreanordnung bekannt, bei der ein Isolatorelement einen Inertialsensor in einer Basis befestigt. Bei der Basis handelt es sich um eine höhlzylinderartige Konstruktion mit einer kegelstumpfförmigen Endseite.

Aus der US 5,237,871 ist eine vibrationsabschwächende Anordnung zum Schutz von Ein-Achseninstrumenten wie beispielsweise Beschleunigungsensoren bekannt. Die Anordnung umfasst einen inneren und einen äußeren Hohlzylinder, wobei der innere Hohlzylinder koaxial zum äußeren Hohlzylinder angeordnet ist. Die Sensoren können im inneren Zylinder mittels Halterungen befestigt sein.

Diese Aufgabe wird gelöst durch eine Anordnung gemäß den unabhängigen Patentansprüchen.

Die Erfindung beruht auf der Verwendung einer mehrfachen Verschalung zur Erhöhung der Lagestabilität der Inertialsensoranordnung relativ zu einem umschließenden Gehäuse, wobei in innovativer Weise als Schalen hohlzylindrische, im wesentlichen konzentrisch zueinander angeordnete Bauelemente vorgesehen sind.

Die Erfindung beruht weiterhin darauf, dass durch die Verwendung mehrerer rohrförmiger Schalen ein langer Abstand der erforderlichen stoßdämpfenden Bauelemente (Stoßschutzelemente, engl. "shock mounts") geschaffen wird, der die Präzision der Inertialsensoranordnung merklich steigert aber trotzdem den erforderlichen Schutz gegen höhere externe Beschleunigungen bietet.

Insbesondere sieht die Erfindung vor, dass eine Anzahl von Stoßschutzelementen ("shock mounts") vorgesehen wird, durch deren Zentren das Volumen eines Prismas aufgespannt wird, dessen Grundfläche einen Durchmesser von maximal 50% der Länge des Prismas aufweist.

Die Erfindung beruht weiterhin darauf, dass in einer speziellen Anordnung der einzelnen Kreiselsysteme innerhalb der Inertialsensoranordnung eine besonders vorteilhafte Massen-Verteilung bzw. ein besonders vorteilhaftes Trägheitsmoment bereitgestellt wird. Das so geschaffene Trägkeitsmoment verbessert die Wirksamkeit des kreiselinternen sog. "Dithering" merklich. Dies gilt insbesondere für die Kreiselsysteme, welche vorrangig für die Bestimmung der Winkelkoordinaten "Azimut" (="Yaw") und "Elevation" (="Pitch") vorgesehen sind.

Die Erfindung wird im Folgenden anhand der Zeichnung erläutert.

Es zeigt:
- Fig. 1: den allgemeinen Aufbau einer erfindungsgemäßen Inertialsonde
- Fig. 2: die Anordnung von Schockminderungs-Stützen innerhalb der Inertialsonde
- Fig. 3: die Schockminderungs-Stützen mit Stoßschutzelementen
- Fig. 4: die Kombination von Schockminderungs-Stützen, Stoßschutzelementen und einem inneren Sensorträger
- Fig. 5: den inneren Sensorträger mit Stoßschutzelementen und elektrischem Anschluß
- Fig. 6: die Kombination von innerem Sensorträger, innerer Sensorhalterung und einem Sensor
- Fig. 7: eine innere Sensorhalterung
- Fig. 8: eine bevorzugte Anordnung von drei Sensorhalterungen für drei Sensoren

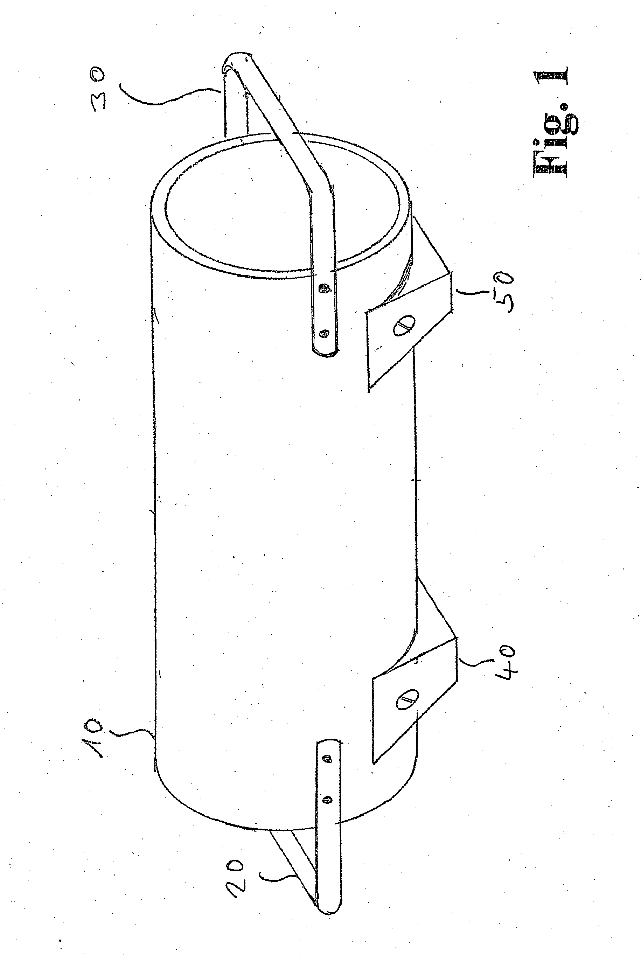

Die in Fig. 1 gezeigte Anordnung zeigt in einer Außenansicht die allgemeine Form einer erfindungsgemäßen Inertialsonde. Diese weist eine im wesentlichen zylindrische Gestalt auf, was durch einen zylindrischen Außenmantel 10 bedingt ist. An diesem sind Tragegriffe 20, 30 angebracht. Mit diesen Tragegriffen kann die Inertialsonde vermittels der Kufen 40, 50 auf zu vermessende Gegenstände aufgesetzt werden, oder insbesondere gemäß der Lehre der DE 10194459.4 auf zylinderförmigen Objekten verschwenkt werden. Durch die Verwendung des zylindrischen Außenmantels 10 wird eine kostengünstige, von besonders hoher mechanischer Stabilität gekennzeichnete Anordnung erreicht.

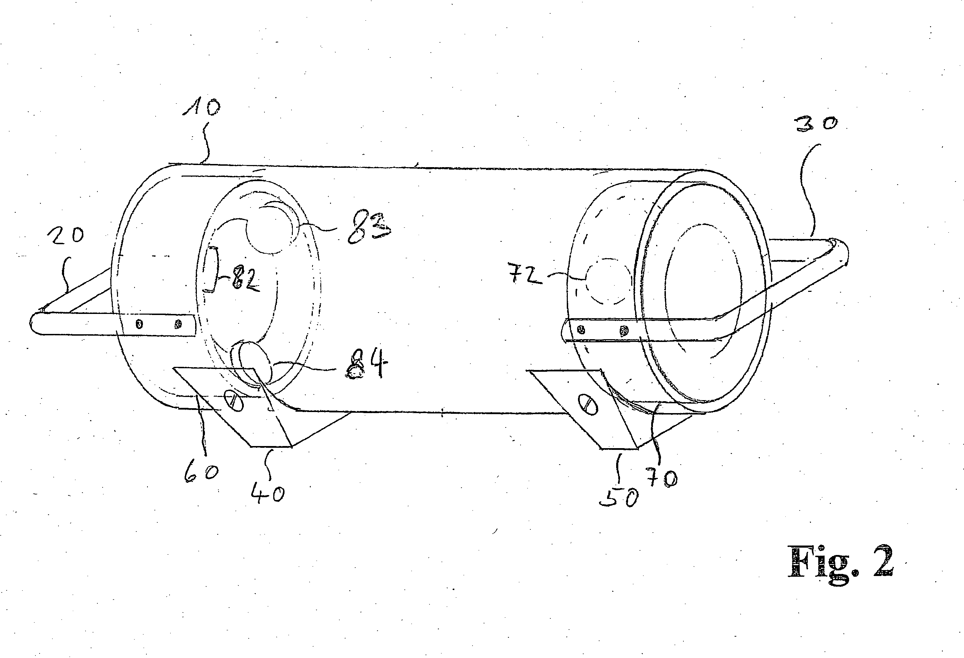

Wie in Fig. 2 gezeigt, befindet sich innerhalb des zylindrischen Außenmantels 10 in konzentrisch vorgenommener Anordnung ein Satz Schockminderungs-Stützen 60, 70. An diesen sind eine Anzahl Stoßschutzelemente ("shock mounts") 82, 83, 84, 85 usw. in präziser Weise und ohne mechanische Lose angebracht. Die wichtige Funktion der Stoßschutzelemente besteht darin, eventuell auf die Kufen oder den zylindrischen Außenmantel 10 der Sonde wirkende Stöße zu dämpfen, so daß die Kreiselsysteme der Sonde vor hohen Beschleunigungswerten geschützt sind.

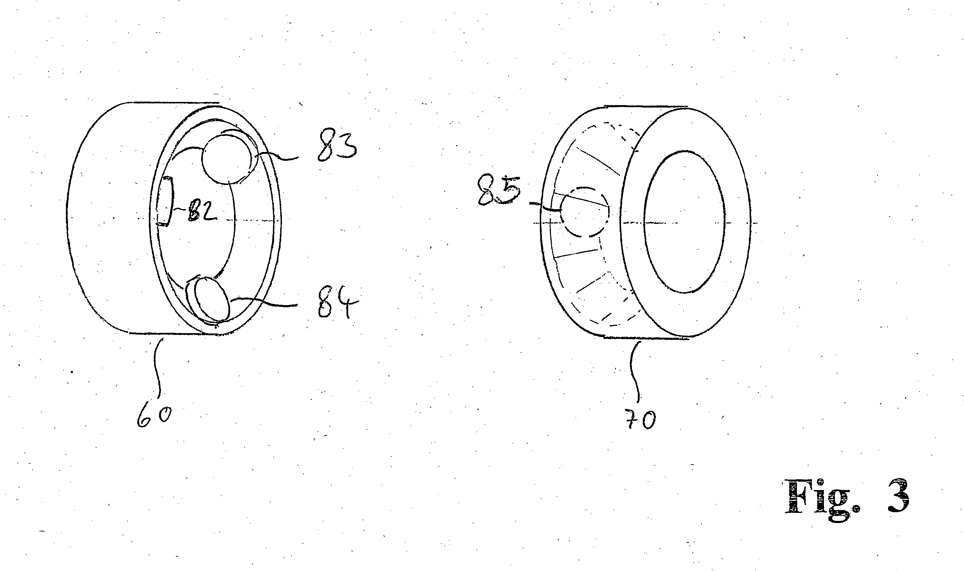

Die entsprechende Ausgestaltung der Schockminderungs-Stützen 60, 70 mit insgesamt sechs hochpräzisen Stoßschutzelementen wird in Fig. 3 separat gezeigt.

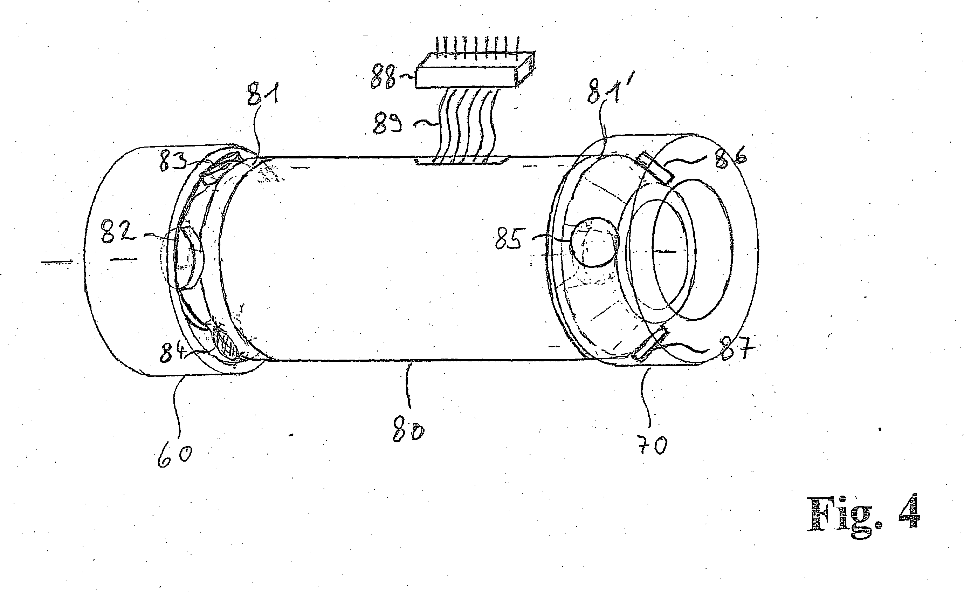

In Fig. 4 wird sodann gezeigt, wie mittels der Schockminderungsstützen und der Stoßschutzelemente ein innerer Sensorträger 80 gehaltert wird, der koaxial zum zylindrischen Außenmantel angeordnet ist. Der innere Sensorträger ist bevorzugt ebenfalls von stabiler, rohrförmiger (hohlzylindrischer) Gestalt und kann eine Öffnung aufweisen, so daß elektrische Verbindungen 89 mittels einer Steckvorrichtung 88 od. dgl. zu einer äußeren Elektronik (nicht gezeigt) eingerichtet werden können.

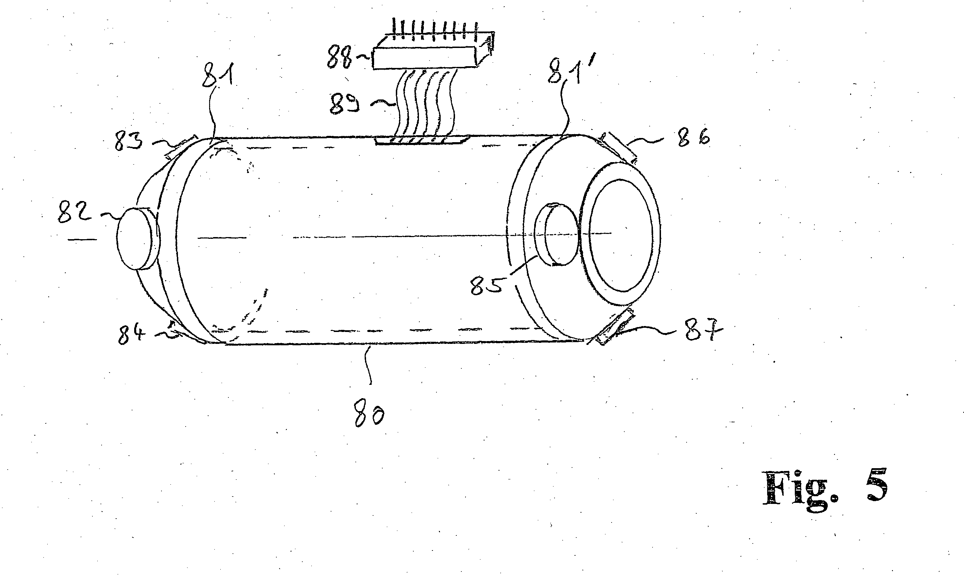

Der innere Sensorträger 80 samt den haltenden Stoßschutzelementen wird separat in Fig. 5 gezeigt. Es ist von Vorteil, den inneren Sensorträger aus mehreren Stücken zu fertigen, beispielsweise Endkappen 81, 81' von etwa konischer Form vorzusehen.

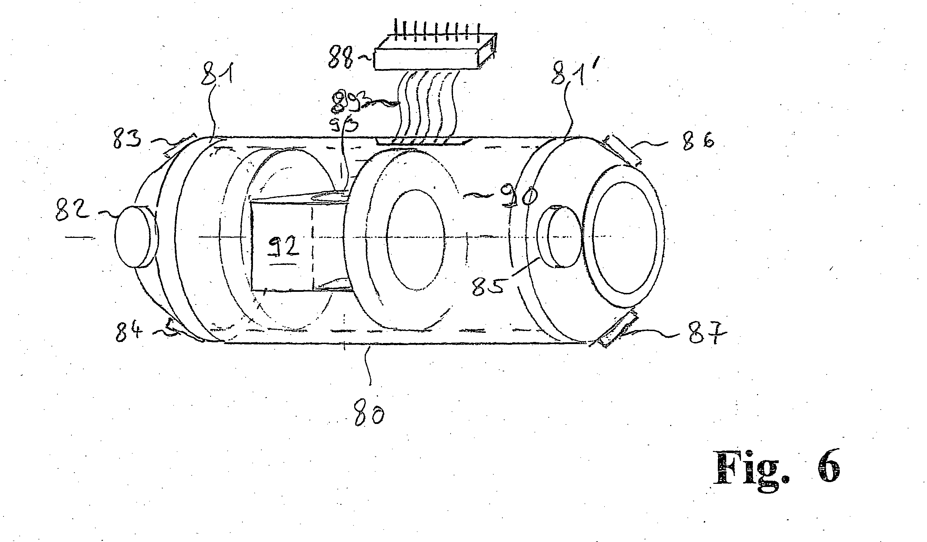

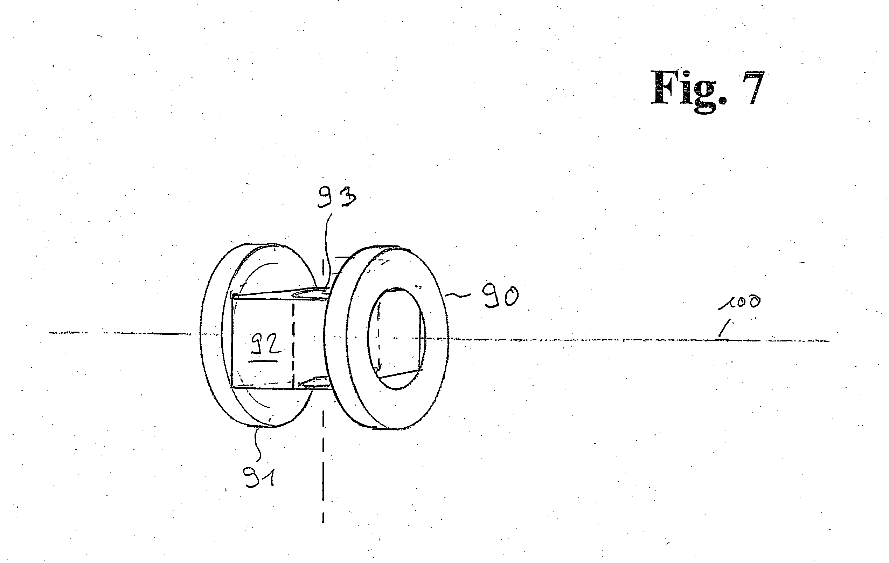

Aus Fig. 6 und 7 ist die Anordnung einer inneren Sensorhalterung 90, 92 innerhalb des inneren Sensorträgers 80 zu ersehen. Die Halterungselemente 90, 93 sind insbesondere geeignet, azimutal und elevationsmäßig sensierende Kreisel in stabiler Weise aufzunehmen. Zu diesem Zweck kann mit Vorteil eine hohlzylinderförmige Ausnehmung 93 vorgesehen sein. - Es kann lediglich eine einzige, oder aber zwei oder weitere Kombinationen von Halterungselementen 90, 93 innerhalb des inneren Sensorträgers 80 vorgesehen sein.

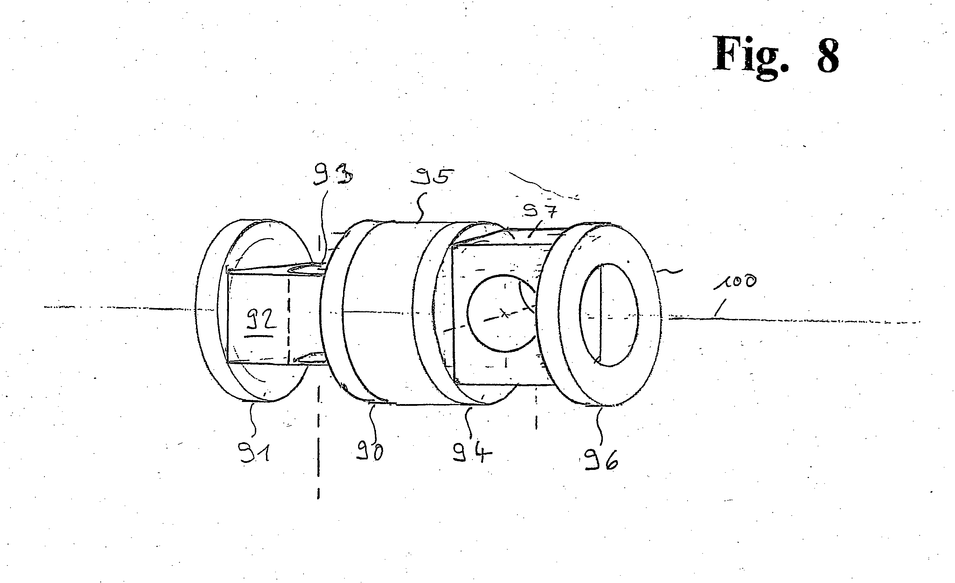

Für eine Anordnung von drei in einer Kreiseltriade zusammenwirkenden Kreiseln ist eine innovative Anordnung von Halterungselementen und dort befestigten Inertialsensoren gemäß Fig. 8 von besonderem Vorteil. Die mittig angeordneten Halterungselemente 90, 94 sind geeignet, im Zusammenspiel mit Halterungselement 95 einen Kreisel (nicht gezeigt) aufzunehmen, der hauptsächlich Roll-Drehungen um die Längsachse 100 erfaßt. Links daran angeflanscht ist Halterungselement 92, an dem wiederum Halterungselement 91 befestigt ist. Diese Kombination ist geeignet, einen Kreisel aufzunehmen, der hauptsächlich Yaw-Bewegungen erfaßt. Rechts am Halterungselement 94 ist Halterungselement 97 samt zugehörigem Halterungselement 96 angeflanscht. Halterungselement 97 ist geeignet, einen Kreisel aufzunehmen, der hauptsächlich Pitch-Bewegungen erfaßt.

Der wesentliche Vorteil der in Fig. 8 gezeigten Anordnung besteht darin, daß insbesondere in Halterungselementen 92 und 97 gefaßten Ringlaserkreisel mit signifikant besserer Präzision arbeiten, als wenn die branchenüblichen Anordnungen verwendet werden, die im wesentlichen kubisch ausgerichtet sind. Dies beruht darauf, daß die von den sog. Dithermotoren der Kreisel abgegebenen Reaktionsmomente, die letztendlich durch die Stoßschutzelemente gepuffert werden, nunmehr auf deutlich vergrößerte Trägheitsmomente stoßen. Die beabsichtigte geringe Schwingbewegung eines Kreiselgehäuses um eine Sollachse wird auf diese Weise zwar kleiner als im Normalfall, jedoch aufgrund des Verhältnisses von Trägheitsmomenten zu Elastizitäten insgesamt reproduzierbarer und somit genauer.

## Patentansprüche

1. Schockisolierende Aufnahmevorrichtung für eine Inertialsensoranordnung, mit einer hohlzylindrigen äußeren Schale (10), in der koaxial erste und zweite Schockminderungs-Stützen (60, 70) angeordnet sind, in deren jeweiligem Innenbereich eine Anzahl von Stoßschutzelementen (82, 83, 84, 85) zur Dämpfung von Stößen angeordnet sind und mit einem inneren Sensorträger (80) von hohlzylindrischer Gestalt, **dadurch gekennzeichnet, dass** der innere Sensorträger (80) eine erste (81) und zweite (81') Endkappe von konischer Form aufweist, und im Bereich der Endkappen (81, 81') mittels der Stoßschutzelemente (82, 83, 84, 85) koaxial zur äußeren Schale (10) befestigt ist, wobei die erste Endkappe (81) im Innenbereich der ersten Schockminderungsstütze (82, 83) und zweite Endkappe (81') im Innenbereich der zweiten Schockminderungsstütze (84, 85) angeordnet ist und
dass durch den Zentren der Stoßschutzelemente (82, 83, 84, 85) das Volumen einen gestreckten Prismas aufgespannt wird, dessen Grundfläche einen Durchmesser von maximal 50 % der Länge des Prismas aufweist.

2. Schockisolierende Aufnahmevorrichtung nach Anspruch 1, **dadurch gekennzeichnet, dass** innerhalb des inneren Sensorträgers (80) Halterungselemente (90, 93, 94, 95, 96, 97) zur Aufnahme von Inertialsensoren angeordnet sind.

3. Schockisolierende Aufnahmevorrichtung nach Anspruch 2, **dadurch gekennzeichnet, dass** die Halterungselemente (90, 93, 94, 95, 96, 97) eindimensional fortschreitend miteinander starr verbunden sind.

4. Schockisolierende Aufnahmevorrichtung nach Anspruch 3, **dadurch gekennzeichnet, dass** die Verbindung unter Verwendung von Verbindungselementen erfolgt.

5. Schockisolierende Aufnahmevorrichtung nach einem der vorhergehenden Ansprüche, **dadurch gekennzeichnet, dass** die Massen der Inertialsensoren so angeordnet sind, dass die wirksamen zugehörigen Trägheitsmomente maximale Werte annehmen.

6. Schockisolierende Aufnahmevorrichtung nach einem der Ansprüche 3 bis 5, **dadurch gekennzeichnet, dass** seitlich von einem dem zentral angeordneten Inertialsensor zur Ermittlung von Roll-Winkelveränderungen Inertialsensoren zur Ermittlung von Yaw-Winkelveränderungen und von Pitch-Winkelveränderungen angeordnet sind.

7. Schockisolierende Aufnahmevorrichtung nach einem der vorhergehenden Ansprüche, **dadurch gekennzeichnet, dass** Inertialsensoren in Form von Ringlaserkreiseln vorgesehen sind.

## Claims

1. Shock-isolating receiving device for an inertial sensor arrangement, with a hollow-cylindrical outer shell (10), coaxially arranged in which are first and second shock-reducing supports (60, 70), in the respective inner region of which a number of impact protection elements (82, 83, 84, 85) for damping impacts are arranged, and with an inner sensor carrier (80) of a hollow-cylindrical shape, **characterized in that** the inner sensor carrier (80) has a first end cap (81) and a second end cap (81') of a conical form, and is fastened in the region of the end caps (81, 81') coaxially in relation to the outer shell (10) by means of the impact protection elements (82, 83, 84, 85), the first end cap (81) being arranged in the inner region of the first shock-reducing support (82, 83) and the second end cap (81') being arranged in the inner region of the second shock-reducing support (84, 85), and **in that** the volume of an elongated prism, the base area of which has a diameter of at most 50% of the length of the prism, is defined by the centres of the shock protection elements (82, 83, 84, 85).

2. Shock-isolating receiving device according to Claim 1, **characterized in that** mounting elements (90, 93, 94, 95, 96, 97) for receiving inertial sensors are arranged within the inner sensor carrier (80).

3. Shock-isolating receiving device according to Claim 2, **characterized in that** the mounting elements (90, 93, 94, 95, 96, 97) are rigidly connected to one another in a one-dimensionally progressing manner.

4. Shock-isolating receiving device according to Claim 3, **characterized in that** the connection takes place by using connecting elements.

5. Shock-isolating receiving device according to one of the preceding claims, **characterized in that** the masses of the inertial sensors are arranged such that the effective associated moments of inertia assume maximum values.

6. Shock-isolating receiving device according to one of Claims 3 to 5, **characterized in that** inertial sensors for determining yawing angle changes and pitching angle changes are arranged laterally with respect to a centrally arranged inertial sensor for determining rolling angle changes.

7. Shock-isolating receiving device according to one of the preceding claims, **characterized in that** inertial sensors are provided in the form of ring laser gyroscopes.

## Revendications

1. Dispositif d'absorption isolante vis-à-vis des chocs pour un ensemble de capteurs inertiels, avec une coque extérieure en forme de cylindre creux (10) dans laquelle des premier et deuxième manchons de réduction des chocs (60, 70) sont disposés dans le plan coaxial, dans la zone intérieure respective desquels un nombre d'éléments de protection contre les chocs (82, 83, 84, 85) sont disposés pour amortir les chocs et avec un support de capteur (80) intérieur en forme de cylindre creux, **caractérisé en ce que** le support de capteur (80) intérieur comporte un premier (81) et un deuxième (81') bouchon d'extrémité de forme conique et est fixé dans la zone des bouchons d'extrémité (81, 81'), dans le plan coaxial par rapport à la coque extérieure (10), à l'aide des éléments de protection contre les chocs (82, 83, 84, 85), le premier bouchon d'extrémité (81) étant disposé dans la zone intérieure du premier manchon de réduction des chocs (82, 83) et le deuxième bouchon d'extrémité (81') étant disposé dans la zone intérieure du deuxième manchon de réduction des chocs (84, 85) et le volume d'un prisme étiré s'étendant à travers les centres des éléments de protection contre les chocs (82, 83, 84, 85) dont la surface de base présente un diamètre représentant au maximum 50 % de la longueur du prisme.

2. Dispositif d'absorption isolante vis-à-vis des chocs selon la revendication 1, **caractérisé en ce que** des éléments de fixation (90, 93, 94, 95, 96, 97) sont disposés à l'intérieur du support de capteur intérieur (80) en vue de loger des capteurs inertiels.

3. Dispositif d'absorption isolante vis-à-vis des chocs selon la revendication 2, **caractérisé en ce que** les éléments de fixation (90, 93, 94, 95, 96, 97) sont reliés de façon rigide les uns aux autres selon une progression unidimensionnelle.

4. Dispositif d'absorption isolante vis-à-vis des chocs selon la revendication 3, **caractérisé en ce que** la liaison est réalisée en utilisant des éléments de liaison.

5. Dispositif d'absorption isolante vis-à-vis des chocs selon l'une quelconque des revendications précédentes, **caractérisé en ce que** les masses des capteurs inertiels sont disposées de telle sorte que les couples inertiels associés actifs prennent des valeurs maximales.

6. Dispositif d'absorption isolante vis-à-vis des chocs selon l'une quelconque des revendications 3 à 5, **caractérisé en ce que** des capteurs inertiels sont disposés en côté d'un capteur inertiel disposé de façon centrale pour calculer les changements d'angle de roulement, pour calculer les changements d'angle de tangage et les changements d'angle de lacet.

7. Dispositif d'absorption isolante vis-à-vis des chocs selon l'une quelconque des revendications précédentes, **caractérisé en ce que** les capteurs inertiels prennent la forme de lasers gyroscopiques annulaires.
